Europäisches Patentamt

European Patent Office

Office européen des brevets

(19)

(11) Veröffentlichungsnummer: **0 517 073 A1**

## (12) EUROPÄISCHE PATENTANMELDUNG

(21) Anmeldenummer: **92108877.9**

(22) Anmeldetag: **26.05.92**

(51) Int. Cl.⁵: **B29C 39/40**, B29C 37/00

(30) Priorität: **04.06.91 DE 4118309**

(43) Veröffentlichungstag der Anmeldung:
**09.12.92 Patentblatt 92/50**

(84) Benannte Vertragsstaaten:
**BE DE FR GB**

(71) Anmelder: **SIEMENS AKTIENGESELLSCHAFT**
**Wittelsbacherplatz 2**
**W-8000 München 2(DE)**

(72) Erfinder: **Kober, Susanne, Dipl.-Ing.(FH)**
**Stolzenbergstrasse 5**
**W-8400 Regensburg(DE)**
Erfinder: **Wipfelder, Ernst, Dr. rer. nat.**
**Neumarkter Strasse 84a**
**W-8000 München 80(DE)**

(54) **Verfahren zum Umhüllen von elektrischen und elektronischen Bauelementen.**

(57) Zum Umhüllen von insbesondere druckempfindlichen elektronischen Bauelementen wird ein neuartiges Verfahren vorgeschlagen, mit dem sich in einfacher Weise ein Gießharzformstoff mit hohem Füllstoffgehalt erzeugen läßt. Dazu wird eine das Bauelement enthaltende Gießform zunächst mit einem feinteiligen rieselfähigen Füllstoff befüllt. Darauf wird ein niederviskoses Reaktionsharz dosiert, wobei der Füllstoff vollständig imprägniert wird und so in der Gießform in schonender Weise ein hohlraumfreier Gießharzformstoff erzeugt wird.

EP 0 517 073 A1

Die Erfindung betrifft ein Verfahren zur Umhüllung von insbesondere druckempfindlichen Bauelementen, zum Beispiel von oberflächenmontierbaren (SMT) Induktivitäten und Sensoren mit Gießharz.

Zur sicheren Einbettung und Fixierung sowie zum Schutz gegen Umgebungseinflüsse können Bauelemente mit Gießharz (Reaktionsharz) vergossen werden. Das Harz soll sowohl gegen mechanische als auch gegen chemisch aggressive Umwelteinwirkungen schützen und darf dabei gleichzeitig die Funktion und den Betrieb des Bauelements nicht beeinträchtigen. Dazu werden E-korrosionsfreie "low stress" Gießharzformstoffe benötigt. Ein durch die Reaktion und das Abkühlen nach der Härtung des Reaktionsharzes bedingter Volumenschwund sowie die thermische Ausdehnung des Gießharzformstoffes während des Montageprozesses des Bauelementes, zum Beispiel durch Löten auf die Leiterplatte, stellen Belastungen des Bauelementes dar, die dessen physikalische Kennwerte verändern können. Insbesondere bei induktiven Bauelementen mit streng spezifizierten Induktivitätswerten werden dabei leicht die Toleranzgrenzen überschritten. Mit bekannten Verfahren und mit bekannten Gießharzen konnte für solche Bauelemente bislang keine befriedigende Umhüllung erzeugt werden.

Aufgabe der vorliegenden Erfindung ist es daher, ein Verfahren anzugeben, mit dem insbesondere druckempfindliche Bauelemente stressfrei und sicher umhüllt werden können. Ziel ist dabei, die Schwankungen der Bauelementparameter, verursacht durch die Umhüllung während und nach thermischen Belastungen, in tolerierbaren Grenzen zu halten.

Diese Aufgabe wird erfindungsgemäß gelöst durch ein Verfahren zum Umhüllen eines elektrischen oder elektronischen Bauelementes mittels Reaktionsharz mit den Schritten

a) Vorsehen einer das Bauelement enthaltenden Gießform,

b) Befüllen der Gießform mit einem feinteiligen rieselfähigen Füllstoff, so daß das Bauelement bis zu einer gewünschten Füllhöhe teilweise bis vollständig von Füllstoff bedeckt ist und

c) Zudosieren bis zur gewünschten Füllhöhe eines niederviskosen Reaktionsharzes in die Gießform auf den Füllstoff mit einer ausreichend niedrigen Dosiergeschwindigkeit, welche einen lunkerfreien Verguß des Bauelementes und des Füllstoffs erlaubt.

Weitere Ausgestaltungen der Erfindung sind den Unteransprüchen zu entnehmen.

Mit dem erfindungsgemäßen Verfahren ist es möglich, selbst bei anspruchsvoller Geometrie des Bauelements, zum Beispiel feine Spalten vollständig und ohne Hohlräume mit Gießharz auszufüllen. Dies gelingt selbst bei dichter Packung des Füllstoffes, so daß gleichzeitig ein hoher Füllgrad von mehr als 70 Gewichtsprozent erreicht werden kann. Dieser Füllgrad wiederum bedingt einen niedrigen Ausdehnungskoeffizienten des gefüllten Gießharzformstoffes und somit eine nur geringe Beeinflussung der physikalischen Parameter eines zum Beispiel druckempfindlichen Bauelements.

Mit dem erfindungsgemäßen Verfahren umhüllte induktive Bauelemente werden in Vergleichsversuchen anderen mit gefüllten und ungefüllten Harzmassen umhüllten Bauelementen gegenübergestellt und zeigen sich diesen in allen Belangen überlegen. Mit flexiblen ungefüllten Gießharzen umhüllte Induktivitäten zeigen nach der Härtung nur geringen Induktivitätsabfall. Doch sinken diese Werte nach thermischer Belastung, wie zum Beispiel beim Löten, irreversibel stark ab. Ursache dafür ist der hohe thermische Ausdehnungskoeffizient der Umhüllung. Im Temperaturwechsel wird insbesondere bei Bauelementen mit geteilten Ferritkernen die Geometrie der Kernhälten zueinander verändert.

Vergleichbar hochgefüllte Gießharze zeigen eine zu hohe Viskosität, so daß ein vollständiges Vergießen und Umhüllen ohne Hohlräume nicht mehr möglich ist. Insbesondere bei Spulen mit hoher Auswicklung verbleiben dabei Zwischenräume, die zu einem Induktivitätsabfall und zu nicht reproduzierbaren Ergebnissen innerhalb einer Produktionsserie führen. Doch selbst bei weniger anspruchsvollen Geometrien eines zu umhüllenden Bauelementes werden mit dem erfindungsgemäßen Verfahren zusätzliche Vorteile erzielt, vor allem durch den höheren Füllgrad und den geringeren apparativen Aufwand beim Vergießen der Harze. Die niederviskosen und daher dünnflüssigen Harze lassen sich einfacher dosieren als entsprechend zähflüssige und hochviskose.

In einer weiteren Ausgestaltung der Erfindung wird der Füllstoff vor dem Zudosieren des Harzes in der Gießform verdichtet, beispielsweise durch Rütteln oder Vibrieren. So wird ein höherer Füllstoffgehalt erzielt, welcher wiederum einen niedrigeren thermischen Ausdehnungskoeffizienten des gefüllten Formstoffes bedingt. In einer dichteren Packung sind die Füllstoffpartikel auch homogener verteilt, so daß der gehärtete Formstoff gleichmäßigere Eigenschaften über das Volumen aufweist.

Für das Verfahren geeignete Füllstoffe müssen vor allem rieselfähig und feinkörnig sein. So lassen sich dann auch beliebig feine Hohlräume problemlos mit Füllstoff auffüllen. Ein weiteres Auswahlkriterium für einen vorteilhaften Füllstoff kann zum Beispiel ein niedriger thermischer Ausdehnungskoeffizient sein, wie ihn etwa eine Keramik aufweist. Geeignete Füllstoffe sind zum Beispiel Quarzmehl, Quarzgut, Glaskugeln, Calciumcarbonat, Aluminiumhydroxid und viele weitere.

Eine mit Aluminiumhydroxid als Füllstoff erzeugte Umhüllung genügt außerdem noch den Flammfestigkeitsanforderungen.

Die von einer Umhüllung auf das umhüllte Bauelement ausgeübten Spannungen hängen in starkem Maße von dem Elastizitätsmodul und dem thermischem Ausdehnungskoeffizienten ab. Da oberhalb der Glasübergangstemperatur der Elastizitätsmodul eines Kunststoffs um mehrere Zehnerpotenzen abnimmt, wird in einer weiteren Ausgestaltung der Erfindung für eine spannungsarme Umhüllung ein Reaktionsharz verwendet, welches als Gießharzformstoff eine Glasübergangstemperatur unterhalb der Betriebstemperatur des damit umhüllten Bauelementes aufweist. Die möglichen Betriebstemperaturen sind von dem speziellen umhüllten Bauelement abhängig und können beispielsweise in Bereichen von - 10 bis + 90°C liegen. Vorteilhafte Reaktionsharze haben daher Glasübergangstemperaturen im Bereich der Raumtemperatur und darunter.

Weitere Vorteile werden mit einem Gießharz erzielt, welches sich bei gemäßigten Temperaturen verarbeiten läßt, zum Beispiel unterhalb von 80°C.

Da das Reaktionsharz im Verfahren nicht beliebig schnell zudosiert werden kann, ist ein Harz erforderlich, welches eine ausreichende Gebrauchsdauer bei der Verarbeitungstemperatur von zum Beispiel mehr als 30 Minuten aufweist. Unter Verarbeitungsdauer ist dabei der Zeitraum zu verstehen, innerhalb dem sich die Viskosität des Harzes verdoppelt. Dabei ist es ohne Belang, ob ein Zweikomponentenharz oder ein einkomponentiges Harz verwendet wird. Die Aushärtung des Harzes erfolgt bevorzugt thermisch, aus den besagten Gründen jedoch ebenfalls bei vorzugsweise gemäßigten Temperaturen, zum Beispiel bei maximal 120°C.

Für das erfindungsgemäße Verfahren hat sich ein flexibilisiertes Epoxid/Anhydrid-Reaktionsharz als gut geeignet erwiesen. Ebenfalls geeignet neben Epoxidharzen sind Reaktionsharze aus der Klasse der Polyurethane, die bezüglich niedriger Viskosität und niedriger Glasübergangstemperatur die entsprechenden Voraussetzungen erfüllen. Grundsätzlich ist die Erfindung jedoch nicht auf die Verwendung vor Harzen aus den genannten Stoffklassen beschränkt, zumal wenn weitere, nicht mit der Erfindung in Zusammenhang stehende Anforderungen an das Bauelement bzw. dessen Umhüllung erfüllt werden müssen.

Ein Füllstoff ist gut rieselfähig, wenn er trocken ist und bestimmte Voraussetzungen bezüglich der Partikeldurchmesser des Füllstoffes erfüllt. Ein zu feiner Füllstoff neigt zum Verklumpen, während zu große Füllstoffpartikel bei kleinen Bauelementabmessungen eine lunkerfreie Umhüllung erschweren. Vorteilhafte mittlere Partikeldurchmesser liegen bei 10 bis 20 $\mu$m, wobei der maximale Partikeldurchmesser 100 $\mu$m nicht überschreiten sollte.

Zur Erzielung eines höheren Füllstoffgehalts ist eine geeignete Partikelgrößenverteilung von Vorteil, mit der sich eine räumlich dichte Füllstoffpackung erzielen läßt.

Die Form der Füllstoffpartikel hat im wesentlichen keinen Einfluß auf dessen Rieselfähigkeit. So sind zum Beispiel auch splitterartige Füllstoffe geeignet.

Eine herabgesetzte Oberflächenenergie ermöglicht eine bessere und schnellere Benetzung und kann das erfindungsgemäße Verfahren beschleunigen. Vorteilhaft kann daher die Verwendung eines oberflächenbehandelten Füllstoffes mit infolgedessen herabgesetzter Oberflächenenergie sein. Grundsätzlich ist die Ausführbarkeit des erfindungsgemäßen Verfahrens mit den gebräuchlichen oberflächenbehandelten und unbehandelten Füllstoffen möglich.

Im folgenden wird die Erfindung anhand von Ausführungsbeispielen und einer Figur näher erläutert. Dazu wird ein auf die Anwendung optimiertes Epoxidharz erfindungsgemäß mit zwei verschiedenen Füllstoffen kombiniert, die physikalischen Parameter bestimmt und mit denen des ungefüllten bzw. gefüllt verarbeiteten Harzes verglichen. Als druckempfindliche Bauelemente werden damit Ferritkerne umhüllt und deren Induktivität nach Herstellung und Weiterverarbeitung bestimmt.

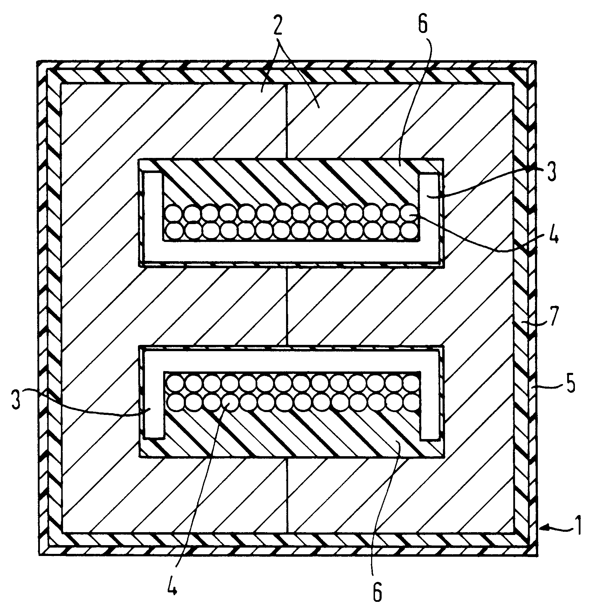

Die Figur zeigt im schematischen Querschnitt ein mit dem erfindungsgemäßen Verfahren umhülltes Bauelement.

Harzzusammensetzung

Eine optimierte Harzzusammensetzung besteht aus 50 Gewichtsteilen Bisphenol-A-Epoxid (Araldit Ny 790), 50 Gewichtsteilen aliphatisches Epoxid (Grilonit F 713), 27 Gewichtsteilen Anhydrid (HT 907), 92 Gewichtsteilen saurem Ester (R2) und einem Gewichtsteil Imidazol-Beschleuniger (2E4MZ). Als Füllstoffe werden für die Ausführungsbeispiele Aluminiumhydroxid (Apyral 2, VAW) und sphärisches Quarzgut (FB 90, Firma Denka) ausgewählt.

Das Reaktionsharz der angegebenen Zusammensetzung besitzt bei 25°C eine Viskosität von 1800 mPas und von 100 mPas bei 80°C. Die Gebrauchsdauer bei 80°C beträgt 50 Minuten.

Eine erste Probekörper-Gießform (V1) wird mit Reaktionsharz befüllt. Eine zweite Probekörper-Gießform (V2) wird mit ca. 500 Gewichtsteilen FB90 befüllt und durch Rütteln verdichtet. Auf den Füllstoff wird nun das Reaktionsharz so langsam aufdosiert, daß das Harz vollständig in den Füllstoff eindringen kann und eine hohlraumfreie Imprägnierung des Füllstoffes und somit eine vollständige Auffüllung des Probekörpervolumenes mit dem Harz erfolgen kann.

Zum Aushärten werden die Gießformen mit den Probekörpern zwei Stunden auf 80°C und weitere zwei Stunden auf 120°C erhitzt.

Für einen dritten Probekörper V3 wird das Harz der angegebenen Zusammensetzung mit ca. 408 Gewichtsteilen Apyral 2 vermischt und der Füllstoff gut eindispergiert. Die so mit ca. 65 Gewichtsprozent gefüllte Reaktionsharzmasse weist bei 80°C eine Viskosität von 3100 mPas und von 1500 mPas bei 90°C auf. Der hohen Viskosität dieser Masse wegen wird bei höherer Temperatur (90°C) verarbeitet. Die Gebrauchsdauer beträgt dabei ca. 30 Minuten. Gehärtet wird dieser Formkörper durch zweistündiges Erhitzen auf 90°C und weitere zwei Stunden auf 120°C.

Als wichtigste Formstoffeigenschaften werden die Glasübergangstemperatur $T_G$, der Elastizitätsmodul E' und der thermische Ausdehnungskoeffizient bestimmt. Die entsprechenden Werte der Probekörper V1, V2 und V3 sind der Tabelle 1 zu entnehmen.

| Formstoffeigen-schaften | V1 | V2 | V3 |
|---|---|---|---|
| TG: (tan δ max) °C | 9 | 13 | 15 |
| tan δ max | 0,82 | 0,37 | 0,48 |
| E' N/mmE2 | | | |
| bei - 50°C | 2600 | 4200 | 4200 |
| bei - 10°C | 1100 | 3300 | 3000 |
| 25°C | 16 | 400 | 260 |
| 100°C | 10 | 160 | 90 |
| ᴐ ppm/K | | | |
| -50 bis 0°C | 50 bis 250 | 20 bis 60 | 20 bis 100 |
| 50 bis 150°C | ca. 300 | ＜100 | ＜160 |

Tabelle 1

Die gemessenen Glasübergangstemperaturen sind für die drei Probekörper erwartungsgemäß nahezu identisch. Ebenfalls erwartungsgemäß weist der ungefüllte Probenkörper V1 den niedrigsten und der Probekörper V2 mit dem höchsten Füllstoffgehalt (70 Gewichtsprozent) den höchsten Elastizitätsmodul auf. Eine umgekehrte, jedoch ebenfalls erwartete Tendenz wird für den Ausdehnungskoeffizienten beobachtet. Der am höchsten gefüllte Probekörper V2 weist mit Abstand die niedrigste thermische Ausdehnung auf.

Für die Versuche V4, V5 und V6 werden verschiedene SMD-fähige E-Kern-Induktivitäten und Ringkerne umhüllt bzw. vergossen. Für V4 wird dazu FB 90 und für V5 Apyral 2 nach dem erfindungsgemäßen Verfahren verwendet. In V6 wird als Vergleichsversuch die gleiche vorgefüllte Masse wie in V3 verwendet. Die vergossenen Induktivitäten werden wie bei V1 bis V3 ausgehärtet. Nach der Härtung der Umhüllung und nach der Belastung der Bauteile bei Löttemperaturen (1 Minute bei 250°C) werden die Induktivitäten L bestimmt. Die drei Gruppen von Meßwerten entsprechen den verschiedenen Bauelementtypen A, B und C. Die anspruchsvollste Geometrie bzw. die engsten Zwischenräume weisen die Bauelemente vom Typ A auf, deren Spulenkörper eine normale Auswicklung haben. Bauelemente vom Typ B besitzen eine geringere Auswicklung und damit eine gröbere Struktur, während die Bauelement vom Typ C Ringkernspulen und daher ohne Luftspalt sind.

| Typ | Messwert | | V4 | V5 | V6 |
|---|---|---|---|---|---|
| A (E6,3) | $L_0$ | $\mu H$ | 115 | 108 | - |
| | $L_1$ | % | - 31,1 | - 29,9 | - |
| | $L_2$ | % | - 29,3 | - 30,7 | - |
| | $L_3$ | % | - 28,6 | - 28,3 | |
| B (E6,3) | $L_0$ | $\mu H$ | 83 | 89 | 75 |
| | $L_1$ | % | - 22,0 | - 20,0 | - 33,4 |
| | $L_2$ | % | - 20,6 | - 19,7 | - 33,6 |
| | $L_3$ | % | - 16,7 | - 16,2 | - 33,4 |
| C (R4) | $L_0$ | $\mu H$ | 146 | 150 | 137 |
| | $L_1$ | % | -40,2 | -29,2 | -55,6 |
| | $L_2$ | % | -38,8 | -28,6 | -49,1 |
| | $L_3$ | % | -37,3 | -26,7 | -46,0 |

Tabelle 1: Änderung der Induktivität

$L_0$   mittlere Ausgangsinduktivität der unvergossenen Spulen

$L_1$   mittlere Induktivitätsänderung nach der Härtung der Vergußmasse

$L_2$   mittlere Induktivitätsänderung nach einer Minute/250°C

$L_3$   mittlerer Induktivitätsabfall nach 3 x 1 Minute/250°C

Bauelemente vom Typ A (E6,3-Spulen mit normaler Auswicklung) können wegen der großen Harzviskosität nicht mit vorgeülltem Gießharz umhüllt werden. Für die übrigen Meßreihen zeigt sich, daß die Induktivitätsabnahme nach der Härtung ($L_1$) unabhängig von dem verwendeten Füllstoff ist. Berücksichtigt man, daß der Induktivitätsabfall $L_1$ erfahrungsgemäß mit steigender Ausgangsinduktivität $L_0$ der unvergossenen Spulen ebenfalls zunimmt, sind die Unterschiede in den $L_1$-Werten zwischen Spulen A und B vernachlässigbar. Deutlich erkennbar ist dagegen der um mehr als 50 Prozent erhöhte Induktivitätsabfall bei nicht erfindungsgemäß umhüllten Bauelementen entsprechend V6.

Für Bauelemente vom Typ C (Ringkerne R4) werden bei allen drei Versuchen V4 bis V6 ein jeweils höherer Induktivitätsabfall beobachtet, welcher vermutlich auf ein größeres Gehäuse und damit auf eine größere Schichtdicke der Umhüllung zurückzuführen ist. Doch auch hier zeigt sich die deutliche Überlegenheit der nach dem erfindungsgemäßen Verfahren umhüllten Bauelemente in einem wesentlich geringeren Induktivitätsabfall.

Somit stellt die Erfindung eine Methode dar, mit der bestimmte empfindliche Bauelemente (Typ A) erstmals befriedigend umhüllt werden können, mit dem generell Umhüllungen mit hohen Füllstoffgehalten bis ca. 70 Gewichtsprozent erzielt werden können und die bei druckempfindlichen Bauelementen zu einer verbesserten Stabilität der Bauelementparameter nach Umhüllung und Weiterverarbeitung der Bauelemente führt. Die Umhüllung von "normalen" und nicht druckempfindlichen Bauelementen wird bei gleichem und höherem Füllstoffgehalt gegenüber vorgefüllten Harzmassen wesentlich erleichtert.

Die Figur zeigt im schematischen Querschnitt ein nach dem erfindungsgemäßen Verfahren umhülltes Bauelement 1.

Die dargestellten SMD-Induktivität 1 weist einen Doppel-E-Kern 2 aus Ferrit auf. Rund um den mittleren Schenkel des E-Kerns befindet sich der Spulenkörper 3 mit der Wicklung 4. Der umwickelte E-Kern befindet sich in einem Thermoplastbecher 5, welcher als Gießform dient. Die Zwischenräume 6 zwischen Kern 2 und Wicklung 4 sowie der Zwischenraum 7 zwischen Kern 2 und Thermoplastbecher 5 ist erfindungsgemäß mit Gießharz vergossen.

**Patentansprüche**

1. Verfahren zum Umhüllen eines elektrischen oder elektronischen Bauelementes mittels Reaktionsharz mit den Schritten
   a) Vorsehen einer das Bauelement enthaltenden Gießform
   b) Befüllen der Gießform mit einem feinteiligen rieselfähigen Füllstoff, so daß das Bauelement bis zu einer gewünschten Füllhöhe teilweise bis vollständig von Füllstoff bedeckt ist und
   c) Zudosieren bis zur gewünschten Füllhöhe eines niederviskosen Reaktionsharzes in die Gießform auf den Füllstoff mit einer ausreichend niedrigen Dosiergeschwindigkeit, welche einen lunkerfreien Verguß des Bauelements und des Füllstoffs erlaubt.

2. Verfahren nach Anspruch 1, **dadurch gekennzeichnet,** daß der Füllstoff vor dem Verfahrensschritt c) in der Gießform verdichtet wird.

3. Verfahren nach Anspruch 2, **dadurch gekennzeichnet,** daß das Verdichten durch Rütteln der Gießform erfolgt.

4. Verfahren nach einem der Ansprüche 1 bis 3, **dadurch gekennzeichnet,** daß ein Füllstoff mit einem im Vergleich zum Reaktionsharz niedrigen thermischen Ausdehnungskoeffizienten verwendet wird, welcher ausgewählt ist aus Quarzmehl, Quarzgut, Glaskugeln, Calciumcarbonat und Aluminiumhydroxid.

5. Verfahren nach einem der Ansprüche 1 bis 4, **dadurch gekennzeichnet,** daß ein Reaktionsharz verwendet wird, welches nach dem Härten eine Glasübergangstemperatur unterhalb der Betriebstemperatur des Bauelements aufweist.

6. Verfahren nach einem der Ansprüche 1 bis 5, **dadurch gekennzeichnet,** daß ein Füllstoff mit einem mittleren Partikeldurchmesser von 10 $\mu$m bis 20 $\mu$m verwendet wird.

7. Verfahren nach einem der Ansprüche 1 bis 6, **dadurch gekennzeichnet,** daß ein flexibilisiertes Epoxid/Anhydrid-Reaktionsharz verwendet wird.

8. Verwendung des Verfahrens nach einem der Ansprüche 1 bis 7 zum Umhüllen von druckempfindlichen Bauelementen, insbesondere von Induktivitäten und Sensoren.

Europäisches
Patentamt

**EUROPÄISCHER RECHERCHENBERICHT**

Nummer der Anmeldung

EP    92 10 8877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 170 374 (GENERAL MORORS CORPORATION)<br>* Anspruch 1; Abbildung 4 *<br>--- | 1-8 | B29C39/40<br>B29C37/00 |
| Y | US-A-4 337 219 (FALKOWSKI)<br>* Anspruch 1; Abbildung 5 *<br>--- | 1-8 | |
| A | US-A-4 289 722 (TRANBARGER)<br>* Anspruch 1; Abbildung 1 *<br><br>----- | 1-8 | |
| | | | **RECHERCHIERTE SACHGEBIETE (Int. Cl.5)**<br><br>B29C |

Der vorliegende Recherchenbericht wurde für alle Patentansprüche erstellt

| Recherchenort | Abschlußdatum der Recherche | Prüfer |
|---|---|---|
| DEN HAAG | 31 AUGUST 1992 | KIRSTEN K.R.M. |